# EUROPEAN PATENT APPLICATION

(11) **EP 4 269 464 A1**
(43) Date of publication of application: **01.11.2023**
(21) Application number: 22169815.2
(22) Date of filing: 25.04.2022
(51) Int. Cl.: C08G 59/40, C09D 163/00

(54) **EPOXY-RESIN MODIFIED COMPOSITION USED FOR COATING OR SEALING**

(71) Applicant: Sika Technology AG, 6340 Baar (CH)
(72) Inventor: Gimeno Santos, Patricia, 70186 Stuttgart (DE); Niethammer, Matthias, 73079 Süssen (DE); Pusel, Thomas, 71282 Hemmingen (DE); Grötzinger, Jochen, 73525 Schwäbisch Gmünd (DE); Pfeifer, Werner, 70439 Stuttgart (DE); Byrne, Michael, Lytham, FY8 2TF (GB); Schröder, Nadine, 71642 Ludwigsburg (DE)
(74) Representative: Sika Patent Attorneys

(57) **Abstract**

What is described is a multicomponent composition which is especially suitable for a floor coating. The multicomponent composition comprises a curing component comprising at least one amine functional adduct, which is a reaction product of
(a) at least one polyether amine,
(b) at least one polyalkylene amine,
(c) at least one arylaliphatic or cycloaliphatic amine,
(d) at least one polyether epoxy resin, and
(e) at least one aromatic liquid epoxy resin.

The composition allows an aesthetically pleasing appearance (visual appearance, surface characteristics), good processibility and levelling.

## Description

### Technical field

The invention relates to a multicomponent composition, to a process for producing a coating with the multicomponent composition and to the use of the multicomponent composition as mortar, seal or coating.

### Prior art

The profile of requirements for floor coating systems is varied in some cases. Desirable properties for floor coatings may be, for example, an esthetically appealing appearance and high mechanical strength. Further demands are, for example, good workability and levelling as well as a matt appearance of the surface.

Organic or organic-inorganic hybrid systems are in common practical use nowadays for floor coatings. Examples are solvent-free epoxy resin reaction coatings, aqueous epoxy resin coatings, polymer-modified cementitious systems (PCC) such as epoxy resin-modified cementitious systems (ECC) or polyurethane-modified cementitious systems.

The combination of different properties, some of which are at odds in terms of material demands, in a floor coating system is frequently difficult. While standard systems, for example, have good properties with regard to some demands, the properties of the system are frequently unsatisfactory in other respects.

WO2018166897 discloses three-component epoxy resin-modified cementitious systems (ECC) comprising aqueous curing compositions, which can especially be used as coating. However, these coatings have high gloss.

WO2020249751 discloses an epoxy composition for floor coatings including a waterborne hardener component, a resin component containing at least one liquid epoxy resin and mineral fillers, wherein the composition contains mineral fillers in the range of 85 to 95 weight-%, based on the total solids of the composition.

### Summary of the invention

The object of the invention was therefore that of providing a composition with which floor coatings having a balanced profile of properties can be produced. More particularly, the intention is to provide a floor coating that simultaneously has an aesthetically pleasing appearance (visual appearance, surface characteristics), good processibility and levelling and matt surface appearance.

The object was surprisingly achieved by a multicomponent composition described hereinafter.

The invention therefore relates to a multicomponent composition comprising
A) a binder component (A) comprising at least one epoxy resin,
B) a curing component (B) comprising at least one amine functional adduct, which is a reaction product of
   (a) at least one polyether amine,
   (b) at least one polyalkylene amine,
   (c) at least one arylaliphatic or cycloaliphatic amine,
   (d) at least one polyether epoxy resin, and
   (e) at least one aromatic liquid epoxy resin, and
C) a solid component (C) comprising at least one filler, preferably an inorganic filler, and at least one hydraulic inorganic binder, preferably cement.

The multicomponent composition contains 6-25% by weight of water, based on the total weight of the multicomponent composition.

The multicomponent composition contains 5-40% by weight, of the hydraulic inorganic binder, preferably cement, based on the total weight of the multicomponent composition.

The term "polyamine" in the present document refers to compounds having at least two primary or secondary amino groups.

In the present document, a "primary" amino group refers to an NH₂ group bonded to one organic radical, and a "secondary" amino group refers to an NH group bonded to two organic radicals which may also together be part of a ring.

In the present document, "molecular weight" is understood to mean the molar mass (in grams per mole) of a molecule. "Average molecular weight" refers to the number-average molecular weight Mₙ of a polydisperse mixture of oligomeric or polymeric molecules, which is typically determined by means of GPC against polystyrene as standard.

The term "polyepoxide" in the present document refers to compounds having at least two epoxy groups. "Diepoxide" refers to compounds having two epoxy groups.

"Epoxide group" or "epoxy group" in the present document refers to the structural element

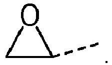

The term "polyether amine" refers to an amine functional polyether.

The term "polyalkylene amine" refers to a linear polyamine which contains at least three amine groups separated from each other by alkylene groups.

The term "arylaliphatic amine" refers to a molecule with an amine group which is connected to an aliphatic carbon atom of an arylaliphatic moiety.

The term "cycloaliphatic amine" refers to a molecule with an amine group which is connected to an aliphatic carbon atom of a cycloaliphatic moiety. The term "solids" or "solids content" refers to the proportion of a composition, from which all the volatile ingredients, such as water or solvents, were evaporated. It can be determined arithmetically or by drying the composition in an infrared dryer or in a circulated air oven to a constant weight.

The term "amine hydrogen" refers to the hydrogens of primary and secondary amine groups.

The term "amine hydrogen equivalent weight" refers to the mass of an amine or an amine containing composition, which contains one mole equivalent of amine hydrogens.

In this document, the term "room temperature" refers to a temperature of 23°C. The term "pot life" refers to the time period, which a multi component composition can be applied after mixing of the components without defects. A typical measure of the pot life can be a doubling of the viscosity.

The abbreviation "EEW" in the present document stands for "epoxy equivalent weight".

"Glycidyl ether" in the present document refers to an ether of 2,3-epoxy-1-propanol (glycidol).

Preferred embodiments of the composition are given in the dependent claims. The invention is elucidated in detail hereinafter.

### Way of executing the invention

Compound names that begin with "poly" refer to substances that, in a formal sense, contain two or more of the functional groups that occur in their names per molecule. The compound may be monomeric, oligomeric or polymeric. A polyamine is, for example, a compound having two or more amino groups. A polyepoxide is a compound having two or more epoxy groups.

Epoxy resins are polyepoxides, i.e. compounds having two or more epoxy groups. Epoxy resins are preferably oligomeric or polymeric compounds. Epoxy resins are sometimes also used in conjunction with what are called reactive diluents. Reactive diluents are mono- or polyepoxides. The reactive diluents have a lower viscosity than the epoxy resin used and serve to reduce the viscosity of the epoxy resin used. The optional reactive diluent is likewise incorporated into the organic binder matrix and is therefore counted here among the epoxy resins for the determination of the organic binder content. The epoxy equivalent weight (EEW) can be determined according to DIN 53188 and is reported in g/eq. The NH equivalent weight can be determined according to DIN 16945 and is reported in g/eq. The stoichiometric ratio of epoxy functionality to amine functionality is the quotient of epoxy equivalent weight to NH equivalent weight and is frequently reported in %. The NH equivalent weight is based here on the active NH hydrogens. A primary amine, for example, has two active NH hydrogens.

The composition of the invention is a multicomponent composition, i.e. the composition comprises multiple, especially three or more, individual components that are only mixed together on use. The components are stored separately before use in order to avoid spontaneous reaction. For use, the components are mixed with one another. After the mixing, inorganic hydration and organic crosslinking reactions may commence, which ultimately lead to curing of the mixture.

The composition of the invention comprises a binder component (A), a curing component (B) and a solid component (C). The composition may be a three-component composition that consists solely of these three components. The composition may, however, if required, also include one or more further additional components. If, for example, the multicomponent composition of the invention, in the preferred embodiment, comprises pigments as colorants, these may be present in at least one of the three components (A), (B) and (C) mentioned and/or in an additional pigment component (D).

It is clear that the proportion of a particular ingredient in the mixture of the components depends on the proportion of this ingredient in the component in question and the mixing ratio of the components. Proportions or ratios of particular ingredients that are specified here, unless stated otherwise, relate to the appropriate or suitable proportions by weight or weight ratios of the ingredients in the mixture of the components of the multicomponent composition. This is obtained, for example, by mixing the components in suitable mixing ratios according to use instructions.

The binder component (A) comprises at least one epoxy resin and optionally a reactive diluent. The binder component (A) is preferably a liquid component. It may be viscous, but is generally pourable.

The binder component (A) comprises at least one epoxy resin. It is possible to use one epoxy resin or a mixture of two or more epoxy resins. Epoxy resins used may be any of the epoxy resins that are customary in epoxy chemistry. Epoxy resins can be prepared, for example, in a known manner from the oxidation of the corresponding olefins or from the reaction of epichlorohydrin with the corresponding polyols or polyphenols.

Epoxy resins can be subdivided into liquid epoxy resins and solid epoxy resins. The epoxy resin may have, for example, an epoxy equivalent weight of 156 to 500 g/eq. The epoxy resin is preferably a diepoxide.

In one embodiment, the epoxy resin may be an aromatic epoxy resin. Suitable examples for this purpose are liquid epoxy resins of the formula (III) 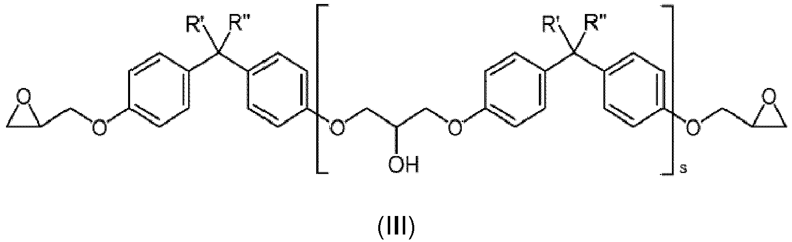 where R' and R" are each independently a hydrogen atom or a methyl group, and s has an average value of 0 to less than 2 and preferably 0 to 1. Preference is given to those liquid resins of the formula (III) in which the index s has an average value of less than 0.2.

The epoxy resins of the formula (III) are diglycidyl ethers of bisphenol A, bisphenol F and bisphenol A/F, where A stands for acetone and F for formaldehyde, which serve as reactants for preparation of these bisphenols. Such liquid epoxy resins are commercially available, for example, under the following names: Araldite^{®} from Huntsman, D.E.R.^{®} from Dow, Epikote^{®} from Momentive, Epalloy^{®} from CVC, Chem Res^{®} from Cognis or Beckopox^{®} from Cytec.

Further suitable aromatic epoxy resins are the glycidylization products of:
- dihydroxybenzene derivatives such as resorcinol, hydroquinone and catechol;
- further bisphenols or polyphenols such as bis(4-hydroxy-3-methylphenyl)methane, 2,2-bis(4-hydroxy-3-methylphenyl)propane (bisphenol C), bis(3,5-dimethyl-4-hydroxyphenyl)methane, 2,2-bis(3,5-dimethyl-4-hydroxyphenyl)propane, 2,2-bis(3,5-dibromo-4-hydroxyphenyl)propane, 2,2-bis(4-hydroxy-3-tert-butylphenyl)propane, 2,2-bis(4-hydroxyphenyl)butane (bisphenol B), 3,3-bis(4-hydroxyphenyl)pentane, 3,4-bis(4-hydroxyphenyl)hexane, 4,4-bis(4-hydroxyphenyl)heptane, 2,4-bis(4-hydroxyphenyl)-2-methylbutane, 2,4-bis(3,5-dimethyl-4-hydroxyphenyl)-2-methylbutane, 1,1-bis(4-hydroxyphenyl)cyclohexane (bisphenol Z), 1,1-bis(4-hydroxyphenyl)-3,3,5-trimethylcyclohexane (bisphenol TMC), 1,1-bis(4-hydroxyphenyl)-1-phenylethane, 1,4-bis[2-(4-hydroxyphenyl)-2-propyl]benzene (bisphenol P), 1,3-bis[2-(4-hydroxyphenyl)-2-propyl]benzene (bisphenol M), 4,4'-dihydroxydiphenyl (DOD), 4,4'-dihydroxybenzophenone, bis(2-hydroxynaphth-1-yl)methane, bis(4-hydroxynaphth-1-yl)methane, 1,5-dihydroxynaphthalene, tris(4-hydroxyphenyl)methane, 1,1,2,2-tetrakis(4-hydroxyphenyl)ethane, bis(4-hydroxyphenyl) ether, bis(4-hydroxyphenyl) sulfone;
- condensation products of phenols with formaldehyde that are obtained under acidic conditions, such as phenol novolaks or cresol novolaks;
- aromatic amines such as aniline, toluidine, 4-aminophenol, 4,4'-methylenediphenyldiamine (MDA), 4,4'-methylenediphenyldi(N-methyl)amine, 4,4'-[1,4-phenylenebis(1-methylethylidene)]bisaniline (bisaniline P), 4,4'-[1,3-phenylenebis(1-methylethylidene)]bisaniline (bisaniline M).

In a further embodiment, the epoxy resin may be an aliphatic or cycloaliphatic epoxy resin, for example
- diglycidyl ether;
- a glycidyl ether of a saturated or unsaturated, branched or unbranched, cyclic or open-chain C₂ to C₃₀ diol, for example ethylene glycol, propylene glycol, butylene glycol, hexanediol, octanediol, a polypropylene glycol, dimethylolcyclohexane, neopentyl glycol;
- a glycidyl ether of a tri- or tetrafunctional, saturated or unsaturated, branched or unbranched, cyclic or open-chain polyol such as castor oil, trimethylolpropane, trimethylolethane, pentaerythritol, sorbitol or glycerol, and alkoxylated glycerol or alkoxylated trimethylolpropane;
- a hydrogenated liquid bisphenol A, F or A/F resin, or the glycidylization products of hydrogenated bisphenol A, F or A/F;
- an N-glycidyl derivative of amides or heterocyclic nitrogen bases, such as triglycidyl cyanurate and triglycidyl isocyanurate, and reaction products of epichlorohydrin and hydantoin.

Further examples of usable epoxy resins are epoxy resins that have been prepared from the oxidation of olefins, for example from the oxidation of vinylcyclohexene, dicyclopentadiene, cyclohexadiene, cyclododecadiene, cyclododecatriene, isoprene, hexa-1,5-diene, butadiene, polybutadiene or divinylbenzene.

Further examples of usable epoxy resins are a solid bisphenol A, F or A/F resin that are formed in the same way as the aforementioned liquid epoxy resins of the formula (III) except that the index s has a value of 2 to 12. Further examples are all aforementioned epoxy resins that have been hydrophilically modified by reaction with at least one polyoxyalkylenepolyol.

Preferred epoxy resins are solid or liquid bisphenol A, F or A/F resins as commercially available, for example, from Dow, Huntsman and Momentive. Epoxy resins used are more preferably diepoxides of a bisphenol A diglycidyl ether, bisphenol F diglycidyl ether and bisphenol A/F diglycidyl ether, especially those having an epoxy equivalent weight of 156 to 250 g/eq, for example the commercial products Araldite^{®} GY 250, Araldite^{®} PY 304, Araldite^{®} GY 282 (from Huntsman); D.E.R. ^{®} 331, D.E.R. ^{®} 330 (from Dow); Epikote^{®} 828, Epikote^{®} 862 (from Momentive), and N,N-diglycidylaniline and a polyglycol diglycidyl ether, preferably having an epoxy equivalent weight of 170 to 340 g/eq., for example the commercial products D.E.R.^{®} 732 and D.E.R.^{®} 736 (from Dow).

It may be advantageous that the binder component (A) contains at least one reactive diluent. As stated, this is counted as part of the epoxy resin for the organic binder content. It is possible to use one or more reactive diluents. Suitable reactive diluents are mono- and polyepoxides. The addition of a reactive diluent to the epoxy resin brings about a reduction in viscosity and, in the cured state of the epoxy resin composition, a reduction in glass transition temperature and the mechanical values.

Examples of reactive diluents are glycidyl ethers of mono- or polyhydric phenols and aliphatic or cycloaliphatic alcohols, such as, in particular, the polyglycidyl ethers of di- or polyols that have already been mentioned as aliphatic or cycloaliphatic epoxy resins, and also, in particular, phenyl glycidyl ether, cresyl glycidyl ether, p-n-butylphenyl glycidyl ether, p-tert-butylphenyl glycidyl ether, nonylphenyl glycidyl ether, allyl glycidyl ether, butyl glycidyl ether, hexyl glycidyl ether, 2-ethylhexyl glycidyl ether, and glycidyl ethers of natural alcohols, for example C₈- to C10-alkyl glycidyl ethers, C₁₂- to C₁₄-alkyl glycidyl ethers or C₁₃- to C₁₅-alkyl glycidyl ethers, commercially available as Erisys^{®} GE-7, Erisys^{®} GE-8 (from CVC) or as Epilox^{®} P 13 - 19 (from Leuna).

The binder component (A) may optionally contain one or more further additives. Suitable additives are elucidated further down.

Preferably, the multicomponent composition, based on the total weight of the multicomponent composition, contains 8-22% by weight, especially 12-18% by weight, of binder component (A).

The curing component (B) comprises at least one amine functional adduct, which is a reaction product of
(f) at least one polyether amine,
(g) at least one polyalkylene amine,
(h) at least one arylaliphatic or cycloaliphatic amine,
(i) at least one polyether epoxy resin, and
(j) at least one aromatic liquid epoxy resin.

The curing component (B) is preferably a liquid component. It may be viscous, but is generally pourable.

The amine functional adduct is based on (a) at least one polyether amine. The polyether amine enables a particularly low viscosity and low shrinkage.

Preferred are polyether amines which are free of secondary or tertiary amine groups and contain two or three, particularly two, primary amine groups.

Suitable polyether amines contain preferably repetitive units selected from 1,2-ethylenoxy, 1,2-propylenoxy, 1,3-propylenoxy, 1,2-butylenoxy and 1,4-butylenoxy.

Preferred are polyether amines with 1,2-ethylenoxy and/or 1,2-propylenoxy as repetitive units.

Particularly preferred are polyether amines containing only 1,2-propylenoxy as repetitive unit in the polyether chain. Such polyether amines are hydrophobic and enable a long pot life.

Preferred polyether amines have an average molecular weight Mₙ in the range of 200 to 5'000 g/mol, more preferred 200 to 2'000 g/mol, particularly 200 to 500 g/mol.

Most preferred is a polyoxypropylene diamine with an average molecular weight Mₙ in the range of 200 to 2'000 g/mol, preferably 200 to 500 g/mol. Such polyether amines are commercially available as Jeffamine^{®} D-230, Jeffamine^{®} D-400 or Jeffamine^{®} D-2000 (all from Huntsman), for example.

The amine functional adduct is further based on (b) at least one polyalkylene amine. The polyalkylene amine enables good pigment dispersion properties, a good stability of the hardener component with no separation and a high gloss of the cured epoxy composition.

Preferably the polyalkylene amine is an amine of the formula (I), 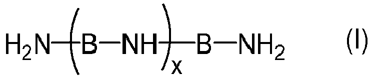 wherein
x is a whole number from 1 to 6, and
B is independently of each other a C₂ to C₆ alkylene group.

Such polyalkylene amines are typically used in a technical grade.

Suitable polyalkylene amines are particularly diethylenetriamine (DETA), triethylenetetramine (TETA), tetraethylenepentamine (TEPA), pentaethylenehexamine (PEHA), higher homologues of linearic polyethylene amines, dipropylenetriamine (DPTA), N-(2-aminoethyl)-1,3-propandiamine (N3-amine), N,N'-bis(3-aminopropyl)ethylenediamine (N4-amine), N,N'-bis(3-aminopropyl)-1,4-diaminobutane, N5-(3-aminopropyl)-2-methyl-1,5-pentandiamine, N3-(3-aminopentyl)-1,3-pentandiamine, N5-(3-amino-1-ethylpropyl)-2-methyl-1,5-pentandiamine, N,N'-bis(3-amino-1-ethylpropyl)-2-methyl-1,5-pentandiamine or bis(6-aminohexyl)amine (BHMT).

Preferably x is 2 or 3 or 4.

Preferably B is 1,2-ethylene and/or 1,3-propylene, particularly 1,2-ethylene.

A particularly preferred polyalkylene amine is TETA, TEPA, PEHA or N4-amine, particularly TETA, TEPA or PEHA. They enable a particularly good pigment wetting and a high cure rate. Most preferred is TEPA.

The amine functional adduct is further based on (c) at least one arylaliphatic or cycloaliphatic amine.

The arylaliphatic or cycloaliphatic amine has preferably two primary amine groups and is free from secondary or tertiary amine groups. It has preferably a molecular weight in the range of 100 to 300 g/mol.

Preferably, the arylaliphatic or cycloaliphatic amine has two primary amine groups and, apart from these, is free from further heteroatoms.

Suitable arylaliphatic or cycloaliphatic amines are particularly 1,2-diaminocyclohexane, 1,3-diaminocyclohexane, 1,4-diaminocyclohexane, 1,3-bis(aminomethyl)cyclohexane, 1,4-bis(aminomethyl)cyclohexane, bis(4-aminocyclohexyl)methane, 4-(4-aminocyclohexylmethyl)aniline, bis(4-amino-3-methylcyclohexyl)methane, bis(4-amino-3-ethylcyclohexyl)methane, bis(4-amino-3,5-dimethylcyclohexyl)methane, bis(4-amino-3-ethyl-5-methylcyclohexyl)methane, 1-amino-3-aminomethyl-3,5,5-trimethylcyclohexane (Isophoronediamine or IPDA), 2(4)-methyl-1,3-diaminocyclohexane, 2,5(2,6)-bis(aminomethyl)bicyclo[2.2.1]heptane (norbornanediamine or NBDA), 3(4),8(9)-bis(aminomethyl)tricyclo[5.2.1.0^{2,6}]-decane, 1,4-diamino-2,2,6-trimethylcyclohexane (TMCDA), 1,8-menthandiamine, 1,3-bis(aminomethyl)benzene (MXDA), 1,4-bis(aminomethyl)benzene, dimer fatty acid based amines such as Priamine^{®} 1071 or Priamine^{®} 1074 (both from Croda), or phenalkamines, for example reaction products of cardanol, formaldehyde and primary diamines, commercially available from Cardolite.

Preferably the arylaliphatic or cycloaliphatic amine is selected from the group consisting of 1,3-bis(aminomethyl)cyclohexane, 1,4-bis(aminomethyl)cyclohexane, 1-amino-3-aminomethyl-3,5,5-trimethylcyclohexane, 2(4)-methyl-1,3-diaminocyclohexane, 2,5(2,6)-bis(aminomethyl)bicyclo[2.2.1]heptane and 1,3-bis(aminomethyl)benzene. Particularly preferred thereof is 1-amino-3-aminomethyl-3,5,5-trimethylcyclohexane or 1,3-bis(aminomethyl)benzene. Most preferred is 1,3-bis(aminomethyl)benzene.

The preferred amines enable well balanced hydrophilic properties, a low viscosity and a high reactivity.

The amine functional adduct is further based on (d) at least one polyether epoxy resin. The polyether epoxy resin enables a good flow behavior and a high impact resistance.

Preferably the polyether epoxy resin has an average molecular weight Mₙ in the range of 200 to 2'000 g/mol, particularly 300 to 1'500 g/mol.

Suitable polyether epoxy resins are particularly polyethylene glycol diglycidylethers, polypropylene glycol diglycidylethers, polytetrahydrofurane diglycidylethers or mixtures thereof.

The polyether epoxy resin is preferably a polypropylene glycol diglycidylether.

Most preferred, the polyether epoxy resin is a technical grade of a polypropylene glycol diglycidylether with an epoxy equivalent weight in the range of 150 to 750 g/mol, particularly 300 to 500 g/mol.

Such polyether epoxy resins are commercially available, such as D.E.R. 732 or D.E.R. 736P (both from Dow), Grilonit^{®} F 704 (from EMS-Chemie) or Araldite^{®} DY-F (from Huntsman), for example.

It can be beneficial to use a mixture of two or more grades of polyether epoxy resins to get most balanced hydrophilic properties and a low viscosity in the adduct.

The amine functional adduct is further based on (e) at least one aromatic liquid epoxy resin.

The aromatic liquid epoxy resin is typically a technical grade of an aromatic polyepoxide resin with a glass transition temperature below 25°C. In contrast, solid epoxy resins have a glass transition temperature above 25°C and can be comminuted to powders.

Suitable aromatic liquid epoxy resins are glycidylethers of
- bisphenol A, bisphenol F or bisphenol A/F, wherein A means acetone and F means formaldehyde, which were used to produce these bisphenols. A technical grade of bisphenol F can also contain positional isomers, particularly derived from 2,4'- or 2,2'-hydroxyphenylmethan;
- resorcinol, hydroquinone or catechol; or
- other bisphenols.

Preferably the aromatic liquid epoxy resin is a bisphenol A and/or F diglycidylether. Such epoxy resins are available from Dow, Huntsman, Hexion, Allnex or Momentive, for example.

To make the adduct, it is possible to use other amines and/or other glycidyl ethers additionally to the ones already mentioned.

In a preferred embodiment of the invention, a solid aromatic epoxy resin is used additionally to the liquid aromatic epoxy resin. This enables coatings with a particularly high gloss. Preferably the solid aromatic epoxy resin is used in an amount in the range of 5 to 15 weight-% based on the total weight of all the epoxy-functional substances in the adduct.

In a further preferred embodiment of the invention, an epoxy-functional reactive diluent is used together with the liquid aromatic epoxy resin, particularly a diglycidylether of 1,4-butandiol, 1,6-hexandiol or 1,4-cyclohexane dimethanol, or a monoglycidylether of C₁₂ to C₁₄ alcohols, C₁₃ to C₁₅ alcohols, phenol, cresol or p-tert.butylphenol. This enables adducts with a particularly low viscosity. Preferred are diglycidylethers, particularly a technical grade of 1,6-hexandiol diglycidylether.

Bisphenol A and/or F diglycidlyethers, which contain a certain amount of reactive diluent, are commercially available.

The amine functional adduct is preferably made by reacting (a) the polyether amine, (b) the polyalkylene amine, (c) the arylaliphatic or cycloaliphatic amine and optionally further amine functional substances, with (d) the polyether epoxy resin, (e) the aromatic liquid epoxy resin and optionally further epoxy-functional substances, in such a way, that the ratio between the primary amine groups and the epoxy groups is more than 1.

Preferably the overall ratio between the primary amine groups and the epoxy groups in the reaction to form the amine functional adduct is in the range of 1.5 to 4, preferably 2 to 3. This ratio range enables a low viscosity adduct which cures to a coating with an even, glossy surface at ambient conditions.

The amine functional adduct is preferably made by reacting the amine group containing compounds with the epoxy group containing compounds at a temperature in the range of 15 to 120°C, preferably 40 to 100°C, more preferably 60 to 90°C. The chronological order of the reaction is free, as long as there is always an excess of primary amine groups to epoxy groups in the reaction mixture.

In a preferred embodiment, the amine functional adduct is made in a one pot reaction by mixing all the reactants together and letting them react in a temperature range between 50 to 130°C, preferably 60 to 100°C. It is preferred to premix the amines, optionally together with a solid epoxy resin, heat this mixture to at least 50°C and slowly add the polyether epoxy resin, the liquid aromatic epoxy resin and optionally reactive diluents under good stirring and temperature control. Such a one pot reaction is particularly easy and fast.

It is possible to add a second step to the production process by reacting the amine functional adduct with a monoepoxide, such as p-tert.butylphenyl glycidylether, for example. Such a second step is possible, but not necessary to get the described good performance of the epoxy composition.

Preferably, the adduct is made in a one pot reaction in only one step. Such a process is particularly easy and fast.

Preferably, the weight ratio between the polyether epoxy resin and the liquid aromatic epoxy resin is in the range of 30/70 to 80/20, preferably 50/50 to 75/25.

Preferably, the weight ratio between the polyether amine and the polyalkylene amine is in the range of 30/70 to 80/20, preferably 50/50 to 75/25.

Preferably, the weight ratio between the arylaliphatic or cycloaliphatic amine and the combined polyether amine plus polyalkylene amine is in the range of 5/95 to 40/60, preferably 10/90 to 30/70.

The preferred weight ratios enable a low viscosity, well balanced hydrophilic and hydrophobic properties and a decorative surface with high gloss.

Preferably the adduct is diluted with a first portion of water after the reaction between the amines and the epoxy resins is finished. With this first portion of water, the adduct is preferably diluted to a solids content in the range of 55 to 90 weight-%, preferably 60 to 80 weight-%. Like this, the adduct is storage stable and easy to use as part of a waterborne hardener component for epoxy resins.

Preferably the waterborne hardener component contains further water.

Additionally to the amine functional adduct, the curing component (B) may contain at least one further amine. However, it is preferred if the curing component (B) contains less than 10 wt.-%, preferably less than 5 wt.-%, more preferably less than 1 wt.-%, based on the total weight of the curing component (B), of at least one further amine, preferably selected from the group consisting of IPDA, MXDA and polyoxypropylene di- or -triamines with an average molecular weight Mₙ in the range of 200 to 500 g/mol. Most preferred, the curing component (B) is free of further amines.

The curing component (B) may optionally contain one or more further additives. Suitable additives are elucidated further down.

The solid component (C) comprises at least one filler, preferably an inorganic filler, and at least one hydraulic inorganic binder, preferably cement. Component (C) is a solid component and is preferably pulverulent.

The inorganic fillers are preferably selected from the list consisting of silicon compounds such as silicon dioxide, silicates and precipitated and fumed silicas; metal oxides such as titanium dioxide, iron oxide, alumina, zinc oxide and magnesium oxide; metal carbonates such as calcium carbonate or dolomite; metal sulfates such as calcium sulfate (gypsum) and barium sulfate; metal hydroxides such as aluminum hydroxide, nitrides or carbides, clay minerals such as kaolin, glasses and ceramic materials.

The silicon dioxide may, for example, be quartz, for example in the form of quartz flour or quartz sand. The silicate may, for example, be talc, mica or wollastonite. The sulfate may, for example, be baryte (heavy spar, barium sulfate). It is also possible to use mixtures of different fillers and/or different fractions of a filler having different sizes. The fillers may take customary forms. More particularly, it is possible to use powders, but also hollow beads (for example of glass or ceramic) or fibers.

More preferably, the inorganic filler is silicon dioxide, especially quartz, more preferably quartz sand.

The fillers used preferably have grain sizes, for example, of 1 µm to 1 cm, especially between 10 µm and 6 mm. The average grain size of the fillers may, for example, be between 10 µm and 3 mm. The grain size and grain size distribution of fillers can be ascertained by sieve analysis or by microscope analysis.

The solid component (C) may also contain one or more additional additives. Examples are auxiliaries and admixtures that are customary in the cement industry, for example plasticizers, setting accelerators, water reducers or deaerators/defoamers.

In the multicomponent composition, the proportion by weight of the solid component (C) is preferably 40-85% by weight, especially 50-80% by weight, preferably 60-70% by weight, based on the total weight of the multicomponent composition.

In a preferred embodiment, the multicomponent composition contains 7.5-35% by weight, preferably 10-30% by weight, of the hydraulic inorganic binder, preferably cement, based on the total weight of the multicomponent composition.

This is especially advantageous in order to obtain coatings, especially floor coatings. The main difference between coatings and primer coats is in the amount of the composition of the invention applied. Compositions are referred to as primer coats when a relatively small amount of material is applied in order to obtain layer thicknesses up to about 500 µm. Greater layer thicknesses are generally referred to as coatings, although the transition from primer coats to coating is not sharply delimited. Preferably, a primer coat has a layer thickness of 0.2-0.5 mm. A coating preferably has a layer thickness of 0.8-4.0 mm.

Preferably more than 70% by weight, more than 80% by weight, more than 90% by weight, especially more than 95% by weight, more preferably 100% by weight, of the hydraulic inorganic binder, preferably cement, is in the solid component (C).

The aforementioned hydraulic inorganic binders are inorganic binders that are hardenable with water, even under water. Hydraulic inorganic binders here also include what are called latently hydraulic binders that set with water under the action of additions, for example blast furnace slag.

Examples of suitable hydraulic inorganic binders are hydraulic lime, cement, fly ash, rice husk ash, calcined recycling products from the paper industry, foundry sand and blast furnace slag and mixtures thereof, particular preference being given to cement. It is possible to use all standard types of cement, especially a cement according to European standard EN 197. It is of course also possible to use cement types according to a different cement standard. It is possible to use one cement or a mixture of different cement types.

Preferred cements are portland cements, sulfoaluminate cements and alumina cements, especially portland cement. Mixtures of cements can lead to particularly good properties. Examples are mixtures of at least one portland cement with either at least one sulfoaluminate cement or with at least one alumina cement. The use of white cement is particularly advantageous.

The multicomponent composition comprises 6-25% by weight of water, based on the total weight of the multicomponent composition.

Preferably, the multicomponent composition contains 10-20 % by weight, especially 12-18 % by weight, preferably 14-16 % by weight, of water, based on the total weight of the multicomponent composition.

Preferably, the weight ratio of the water present in the binder component (A) to the water present in the curing component (B) is 0.5 - 2.0, preferably 0.75 - 1.5, most preferably 1.0 - 1.4.

It may also be advantageous to choose the amount of water in the multicomponent composition preferably such that the weight ratio of water to hydraulic inorganic binder, preferably cement, is in the range from 0.3 to 1.6, preferably 0.5 to 1.5, most preferably 0.6 to 1.3.

It may also be advantageous for the stoichiometric ratio of epoxy functionality to amine functionality to be 75%-125% (or 0.75-1.25), preferably 80%-120%, especially 90%-110%, more preferably 95%-105%.

It may also be advantageous for the weight ratio of the solid component (C) to the binder component (A) to be 3.0-5.5, especially 3.5-5.0.

Further optional additives that may especially be present in the binder component (A) and/or in the curing component (B), but optionally also in one or more other components, are additives that are customarily used in this field, for example stabilizers against heat, light or UV radiation; flame-retardant substances and biocides.

The multicomponent composition may, as well as the three components mentioned, if required, comprise further additional components. An example of such an optional additional component is a pigment component (D).

The pigments may be inorganic or organic pigments. Examples of inorganic pigments are titanium dioxide, carbon black, bismuth pigments, iron oxide pigments, chromium oxides, mixed phase oxide pigments, Prussian blue, ultramarine, cobalt pigments and chromate pigments. Examples of organic pigments are azo pigments and polycyclic pigments such as copper phthalocyanine, quinacridone, diketopyrrolopyrrole, perylene, isoindoline, dioxazine and indanthrone pigments.

The multicomponent composition also preferably contains 0.1% by weight to 10% by weight, preferably 0.5% by weight to 5% by weight, of pigment as colorant, based on the total weight.

In addition, for example, some of the water may be present as a separate component which is only added on mixing of the components prior to use, in order to establish the desired amount of water.

The invention also relates to a method of producing a coating, primer coat or seal, preferably a floor coating, floor primer coat or floor seal, with an above-described multicomponent composition, wherein the method comprises the following method steps:
a) mixing the binder component (A) and the curing component (B),
b) adding the solid component (C) to the mixture obtained in step a) while stirring in order to obtain a mixed composition,
c) applying the mixed composition obtained to a substrate,
d) optionally smoothing or deaerating the mixed composition applied
   and
e) curing the mixed composition applied in order to obtain the coating.

The applying of the mixed composition and the curing are advantageously effected, for example, at temperatures in the range from 5 to 40°C.

As explained, the multicomponent composition may also comprise one or more additional components. The manner and sequence of addition of the additional components to the mixture of the composition is as desired, but preference is given to mixing in one or more additional liquid components, if used, in step a). One or more additional solid components, if used, are preferably mixed in in step b).

The substrate may be provided with a primer coat prior to the application of the mixed composition. In addition, it is possible to apply a top layer as sealing layer to the mixed composition applied.

The substrate may be any desired material. It is preferably a floor covering, for example of concrete, mortar or screed, which may optionally have a coating, for example a scratchcoat or a primer coat and/or another customary coating.

The mixing of the multicomponent composition begins the curing reaction. The epoxy groups of the epoxy resin and optionally of the reactive diluent react with the reactive NH hydrogens to form the organic binder matrix, while any hydraulic inorganic binder present together with the water forms the inorganic binder matrix by hydration reactions, which ultimately results in curing of the composition. Thus, the present invention also relates to a cured composition or coating.

The invention therefore also relates to a coating, especially floor coating, obtainable by the process described above.

The invention relates to use of an above-described multicomponent composition as coating, especially floor coating.

### Examples

The following examples illustrate the present invention without being limiting. "AHEW" means amine hydrogen equivalent weight.

"EEW" means epoxy group equivalent weight.

Chemical substances not otherwise specified are from Sigma-Aldrich Chemie GmbH.

The viscosity was determined by a Brookfield viscometer with spindle number 3 at speed number 5.

### Preparation of the hardener "ex. 10" (water-borne hardener not according to the invention):

The raw material "ex. 10" was prepared as described in WO2009150212 on pages 39 to 40 for preparation of example 10, except that less water was used for the preparation. The water content of the final product was 20% by weight, rather than 50% by weight as shown in table 2 on page 40 in WO2009150212. The "ex. 10" raw material used in the present document therefore contains 20% by weight of water, 32% by weight of the compound **VB,** 36% by weight of polyamine-polyepoxide adduct **AD** and 12% by weight of polyamine **A4** (IPDA).

### Preparation of the amine functional adduct:

### Used substances:

- Jeffamine^{®} D-400:: polyoxypropylene diamine, average molecular weight Mₙ 430 g/mol, AHEW 115 g/mol, equivalent weight per primary amine group 230 g/mol, from Huntsman
- TEPA:: tetraethylene pentamine, AHEW 30 g/mol, equivalent weight per primary amine group 95 g/mol, technical grade, from Huntsman
- MXDA:: 1,3-bis(aminomethyl)cyclohexane, AHEW 34g/mol, equivalent weight per primary amine group 68 g/mol, from Mitsubishi Gas Chem.
- Grilonit^{®} F 704:: polypropylene glycol diglycidylether, EEW 330 g/mol, from EMS-Chemie
- Araldite^{®} DY-F:: polypropylene glycol diglycidylether, EEW 475 g/mol, from Huntsman
- D.E.R.^{™} 358:: Bisphenol A/F diglycidylether containing hexandiol diglycidylether, EEW 180 g/mol, from Dow
- Beckopox^{®} EP 384w:: solid epoxy resin dispersed in water, solids content 60 weight-%, EEW 980 g/mol (including water), from Allnex
- Araldite^{®} DY-P:: p-tert.butylphenyl glycidylether, EEW 233 g/mol, from Huntsman

### Adduct B1:

20.33 wpt Jeffamine^{®} D-400, 9.93 weight-parts (wpt) TEPA, 5.92 wpt MXDA and 4.59 wpt Beckopox^{®} EP 384w were put in a round bottom flask and heated to 70°C. Then, a premix of 6.16 wpt Grilonit^{®} F 704, 13.62 wpt Araldite^{®} DY-F and 11.29 wpt D.E.R.^{™} 358 was slowly added under good stirring and the temperature in the flask was kept below 85°C. Afterwards, the reaction mixture was held at 80 to 85°C during 2 hours, followed by the addition of 26.14 wpt tap water and 2.02 wpt acetic acid, each under good stirring. The obtained amine functional adduct was cooled to room temperature. It had a solids content of 72 weight-%, a viscosity at 20°C of 3.5 Pa·s, a calculated AHEW of 176.3 g/eq and a clear, yellowish aspect.

**Table 1: Composition (in weight parts) and features of the adduct B1**

| **Adduct** | **B1** |
|---|---|
| (a) Jeffamine^{®} D-400 | 20.33 |
| (b) TEPA | 9.93 |
| (c) MXDA | 5.92 |
| Beckopox^{®} EP 384w | 4.59 |
| (d) Grilonit^{®} F 704 | 6.16 |
| (d) Araldite^{®} DY-F | 13.62 |
| (e) D.E.R.^{™} 358 | 11.29 |
| Araldite^{®} DY-P | 0 |
| tap water | 26.14 |
| acetic acid | 2.02 |
| viscosity at 20°C [Pa·s] | 3.5 |
| AHEW (calc.) [g/mol] | 176.3 |
| water content [wt-%] | 28 |

Three-component compositions were formulated according to table 2 below.

Table 3 shows the experimental results.

### Preparation of component B:

To an initial charge of water in a suitable vessel are added the further raw materials as shown in table 2 with stirring by dissolver.

### Preparation of the mixed compositions:

Components A and B are mixed with a paddle stirrer and, after good mixing (about 1-2 minutes), component C is added continuously and mixed for about a further 3 minutes.

The mixed compositions **Ex1-Ex8** and **Ref1** were tested as follows:

### Workability (at 23 °C (RT) or 8 °C)

Workability is determined by the user during application. The crucial factor here is the resistance with which the coating can be distributed. The aim is to be able to apply a 2 mm-thick layer with proportionate expenditure of force and in appropriate time with a toothed spatula. The reference is the self-leveling coating systems available on the market and the application properties thereof.

The following scale was used
very good = surface is level without the help of a roller.
good = to level the surface little help of a roller was needed.
moderate = to level the surface moderate help of a roller was needed.
insufficient (Ref. 1) = very difficult to level the surface using a roller.

### Leveling (at 23 °C (RT) or 8 °C)

Leveling is ascertained by visual assessment of a self-leveling coating worked with a toothed spatula. The coating is applied homogeneously as a layer of thickness 2 mm at 23°C. Subsequently, the toothed spatula is used to pile the material up to a thickness of 10 mm at one point. After curing, any remaining traces of this experiment are assessed.

### Visual appearance (at 23 °C (RT) or 8 °C)

The visual appearance of the self-leveling coating applied by methods described above is assessed (toothed spatula, layer of thickness 2 mm, 23°C). Important aspects are how uniformly the surface has cured. Disadvantageous surface defects that are taken into account are spots, graininess of the surface, remaining waves and the resulting disturbed appearance of the surface, and pinholes. Pinholes refer to small holes that remain in the surface.

The following scale was used
very good = flawless surface
good = surface with minor imperfections
moderate = surface with some remaining roller marks that a slightly visible.
insufficient (Ref. 1) = uneven surface with many remaining roller marks that a clearly visible.

The appearance of cracks is rated as "yes" or "no" under "Crack formation".

### Shore D

**Shore D** hardness was measured according to DIN 53505 after storage in normal climate (RT = 23 °C / 50 % relative humidity) or at 8 °C /80 % relative humidity (8 °C) for 1 day and for 7 days.

The weight ratio of water to cement is shown as "Ratio W/C".

The stoichiometric ratio of epoxy functionality to amine functionality is shown in table 2 as "Ratio Epoxy / NH".

It was surprisingly found that if a water-borne hardener according to the state of the art was used, the obtained material provided a floor coating with only moderate surface characteristics, moderate workability and significant crack formation. This can be seen for example in the comparison of Ref.1 with Ex.1 in table 3.

The coatings obtained by Ex.1 - Ex.8 were tested for their early water sensitivity (carbonatation / efflorescence formation). For this purpose, 2 ml ultrapure water was applied on a water-soaked filter paper applied on the coating at a new point each time. The water was applied on the 3rd day and the 7th day (each time at a new location) after the application of the coating at 8°C and 23°C. None of the coatings obtained by Ex.1 - Ex.8 showed signs of carbonatation / efflorescence formation. Further, all the obtained coatings had a matt surface.

**Table 2**

| | **Ref.1** | **Ex.1** | **Ex.2** | **Ex.3** | **Ex.4** | **Ex.5** | **Ex.6** | **Ex.7** | **Ex.8** |
|---|---|---|---|---|---|---|---|---|---|
| **Component B** | | | | | | | | | |
| Adduct B1 | | 9.93 | 10.40 | 10.40 | 10.40 | 9.36 | 11.44 | 10.40 | 10.40 |
| ex.10 | 9.20 | | | | | | | | |
| Water | 6.68 | 6.68 | 6.85 | 6.85 | 6.85 | 6.85 | 6.85 | 5.47 | 8.22 |
| Defoamer | 0.08 | 0.08 | 0.09 | 0.09 | 0.09 | 0.09 | 0.09 | 0.09 | 0.09 |
| Pigment | 0.87 | 0.87 | | | | | | | |

| **Component A** | | | | | | | | | |
|---|---|---|---|---|---|---|---|---|---|
| Liquid bisphenol A epoxy resin | 3.77 | 3.77 | 3.77 | 3.77 | 3.77 | 3.77 | 3.77 | 3.77 | 3.77 |
| Mixture (1:1) liquid bisphenol A/F epoxy resin | 5.65 | 5.65 | 5.65 | 5.65 | 5.65 | 5.65 | 5.65 | 5.65 | 5.65 |
| Emulsifier (fatty alcohol ethoxylate) | 0.20 | 0.20 | 0.20 | 0.20 | 0.20 | 0.20 | 0.20 | 0.20 | 0.20 |
| Reactive diluent (C12/C14-alkyl glycidyl ether) | 0.62 | 0.62 | 0.62 | 0.62 | 0.62 | 0.62 | 0.62 | 0.62 | 0.62 |
| Water | 6.68 | 6.68 | 5.77 | 5.77 | 5.77 | 5.77 | 5.77 | 4.62 | 6.92 |

| **Component C** | | | | | | | | | |
|---|---|---|---|---|---|---|---|---|---|
| Silica sand, 0,1-0,6MM | 21.00 | 21.00 | 21.00 | 16.80 | 25.20 | 21.00 | 21.00 | 21.00 | 21.00 |
| Silica sand, 0,3 - 0,8 MM | 21.00 | 21.00 | 21.00 | 16.80 | 25.20 | 21.00 | 21.00 | 21.00 | 21.00 |
| White Portland cement, CEM I 52,5 | 24.66 | 24.66 | 24.66 | 19.73 | 29.59 | 24.66 | 24.66 | 19.73 | 29.59 |
| Total (wt.-%): | 100.41 | 101.12 | 99.99 | 86.66 | 113.33 | 98.95 | 101.03 | 92.54 | 107.45 |
| | | | | | | | | | |
| Ratio W/C | 0.62 | 0.65 | 0.63 | 0.79 | 0.52 | 0.62 | 0.64 | 0.66 | 0.61 |
| Ratio Epoxy/NH | 1.00 | 0.99 | 1.04 | 1.04 | 1.04 | 0.96 | 1.13 | 1.04 | 1.04 |
| Wt.-% cement in total composition | 24.6 | 24.4 | 24.7 | 22.8 | 26.1 | 24.9 | 24.4 | 21.3 | 27.5 |

**Table 3**

| | Ref.1 | Ex.1 | Ex.2 | Ex.3 | Ex.4 | Ex.5 | Ex.6 | Ex.7 | Ex.8 |
|---|---|---|---|---|---|---|---|---|---|
| Workability RT | moderate | very good | very good | very good | good | very good | very good | very good | very good |
| Workability 8°C | n.d. | n.d. | good | very good | moderate | good | good | very good | good |
| Visual appearance, RT/8°C | moderate /n.d. | good/n.d. | good/good | very good/good | moderate/ moderate | good/ moderate | good/ moderate | good/ moderate | moderate/ moderate |
| Crack formation, RT/8°C | yes/n.d. | no/n.d. | no/no | no/no | no/no | no/no | no/no | no/no | no/no |
| Leveling, RT/8°C in minutes | n.d./n.d. | 80/n.d. | 80/110 | 80/120 | 70/90 | 80/100 | 80/110 | 80/110 | 80/110 |
| Shore D, RT 1/7 d | n.d. | 38/70 | 51/74 | 42/68 | 49/75 | 51/74 | 53/73 | 46/71 | 50/73 |
| Shore D, 8°C 1/7 d | n.d. | n.d. | 19/61 | 7/42 | 15/53 | 23/59 | 18/61 | 16/55 | 27/55 |

## Claims

1. A multicomponent composition comprising
A) a binder component (A) comprising at least one epoxy resin,
B) a curing component (B) comprising at least one amine functional adduct, which is a reaction product of
(a) at least one polyether amine,
(b) at least one polyalkylene amine,
(c) at least one arylaliphatic or cycloaliphatic amine,
(d) at least one polyether epoxy resin, and
(e) at least one aromatic liquid epoxy resin, and
C) a solid component (C) comprising at least one filler, preferably an inorganic filler, and at least one hydraulic inorganic binder, preferably cement,
**characterized in that**
- the multicomponent composition contains 6-25% by weight of water, based on the total weight of the multicomponent composition, and
- the multicomponent composition contains 5-40% by weight, of the hydraulic inorganic binder, preferably cement, based on the total weight of the multicomponent composition.

2. The multicomponent composition as claimed in claim 1, **characterized in that** the polyether amine is a polyoxypropylene diamine with an average molecular weight Mn in the range of 200 to 2'000 g/mol, preferably 200 to 500 g/mol.

3. The multicomponent composition as claimed in either of the preceding claims, **characterized in that** the polyalkylene amine is an amine of the formula (I), 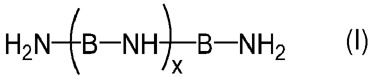 wherein
x is a whole number from 1 to 6, and
B is independently of each other a C₂ to C₆ alkylene group.

4. The multicomponent composition as claimed in either of the preceding claims, **characterized in that** the arylaliphatic or cycloaliphatic amine has two primary amine groups, is free from secondary or tertiary amine groups and has a molecular weight in the range of 100 to 300 g/mol.

5. The multicomponent composition as claimed in either of the preceding claims, **characterized in that** the polyether epoxy resin is a polypropylene glycol diglycidylether.

6. The multicomponent composition as claimed in either of the preceding claims, **characterized in that** the overall ratio between the primary amine groups and the epoxy groups in the reaction to form the amine functional adduct is in the range of 1.5 to 4.

7. The multicomponent composition as claimed in either of the preceding claims, **characterized in that** the weight ratio of the water present in the binder component (A) to the water present in the curing component (B) is 0.5 - 2.0, preferably 0.75 - 1.5, most preferably 1.0 - 1.4.

8. The multicomponent composition as claimed in either of the preceding claims, **characterized in that** the amount of water in the multicomponent composition is such that the weight ratio of water to hydraulic inorganic binder, preferably cement, is in the range from 0.3 to 1.6, preferably 0.5 to 1.5, most preferably 0.6 to 1.3.

9. The multicomponent composition as claimed in any of the preceding claims, **characterized in that** the multicomponent composition contains 10-20 % by weight, especially 12-18 % by weight, preferably 14-16 % by weight, of water, based on the total weight of the multicomponent composition.

10. The multicomponent composition as claimed in any of the preceding claims, **characterized in that** the multicomponent composition, based on the total weight of the multicomponent composition, contains 8-22% by weight, especially 12-18% by weight, of binder component (A).

11. The multicomponent composition as claimed in any of the preceding claims, **characterized in that** the proportion by weight of the solid component (C) is 40-85% by weight, especially 50-80% by weight, preferably 60-70% by weight, based on the total weight of the multicomponent composition.

12. The multicomponent composition as claimed in any of the preceding claims, **characterized in that** the stoichiometric ratio of epoxy functionality to amine functionality is 80%-120%, preferably 90%-110%, more preferably 95%-105%.

13. The multicomponent composition as claimed in any of the preceding claims, **characterized in that** the weight ratio of the solid component (C) to the binder component (A) is 3.0-5.5, especially 3.5-5.0.

14. The multicomponent composition as claimed in any of the preceding claims, **characterized in that** the multicomponent composition contains 7.5-35% by weight, preferably 10-30% by weight, of the hydraulic inorganic binder, preferably cement, based on the total weight of the multicomponent composition.

15. A method of producing a coating, preferably a floor coating, with a multicomponent composition as claimed in any of claims 1 to 14, wherein the method comprises the following method steps:
a) mixing the binder component (A) and the curing component (B),
b) adding the solid component (C) to the mixture obtained in step a) while stirring in order to obtain a mixed composition,
c) applying the mixed composition obtained to a substrate,
d) optionally smoothing or deaerating the mixed composition applied and
e) curing the mixed composition applied in order to obtain the coating.

16. A coating, especially floor coating, obtainable by a method as claimed in claim 15.
